# EUROPÄISCHE PATENTSCHRIFT

(11) **EP 2 034 378 B1**
(45) Veröffentlichungstag und Bekanntmachung des Hinweises auf die Patenterteilung: **14.10.2015**
(21) Anmeldenummer: 08005964.5
(22) Anmeldetag: 28.03.2008
(51) Int. Cl.: G05B 19/406, G05B 19/409

(54) **Werkzeugmaschine mit Zugriffssteuereinrichtung**
Machine tool with access control device
Machine-outil dotée d'un dispositif de commande d'accès

(30) Priorität: 04.09.2007 DE 102007041768
(43) Veröffentlichungstag der Anmeldung: 11.03.2009
(73) Patentinhaber: DECKEL MAHO Pfronten GmbH, 87459 Pfronten (DE)
(72) Erfinder: Hahn, Rudolf, 87645 Schwangau (DE); Seitz, Reinhold, 87659 Hopferau (DE); Bornemann, Armin, 87616 Marktoberdorf (DE)
(74) Vertreter: MERH-IP Matias Erny Reichl Hoffmann

(56) Entgegenhaltungen:
- EP-A2- 1 621 944
- WO-A1-2006/125404
- WO-A1-2007/086475
- WO-A2-2006/105567
- DE-A1- 10 037 003
- DE-A1-102005 002 472
- JP-A- 6 119 021
- US-A- 5 613 000

## Beschreibung

Die vorliegende Erfindung betrifft ein System umfassend eine Werkzeugmaschine mit einer Zugriffssteuereinrichtung, die dazu eingerichtet ist, den Zugriff auf die Werkzeugmaschine zu steuern, und einer Berechtigungsdatenbereitstellungsvorrichtung mit mobilem Datenträgern.

Aus dem Stand der Technik sind Zugriffssteuerungen auf Werkzeugmaschinen mittels eines oder mehrerer Schlüsselschalter bekannt. Über diese Schlüsselschalter werden gezielt einzelne Betriebsarten der Maschine im Sinne der europäischen Richtlinien und Normen aktiviert.

Die DE 100 37 003 A1 zeigt ein System zum Prüfen einer Eingiffsberechtigung, bei dem ein elektronischer Schlüssel mit einem Speicherelement nach dem Transponder-Prinzip einer Steuereinrichtung, beispielsweise einer Werkzeugmaschine, zugeführt wird und die Werkzeugmaschine eine Eingriffsberechtigungsprüfungseinrichtung aufweist, die nach Erhalt entsprechender elektromagnetischer Signale von dem Schlüssel prüft, ob der Nutzer zur Ausführung der entsprechenden Betriebsfunktion an der Maschine autorisiert ist.

Die EP 1621944 A2 offenbart ein Sicherheitssystem für automatisierte industrielle Anlagen, das ein entsprechendes Interface aufweist, über das die automatisierte Anlage mit einem Sicherheitszugangsgerät kommuniziert, um einem Nutzer Zugang zu der Anlage zu gewähren.

Die WO 2006/105567 A2 beschreibt ein Verfahren und eine Vorrichtung zur verwechslungsfreien ausschließenden Zuordnung der Befehlsgewalt einer Bedienperson zu einer steuerbaren technischen Einrichtung.

Ausgehend vom Stand der Technik ist es eine Aufgabe der vorliegenden Erfindung, eine Werkzeugmaschine bereitzustellen, die eine verbesserte Steuerung des Zugriffs auf die Werkzeugmaschine erlaubt.

Diese Aufgabe wird erfindungsgemäß durch ein System mit den Merkmalen des Patentanspruchs 1 gelöst. Vorteilhafte Ausgestaltungen und bevorzugte Ausführungsbeispiele der Erfindung sind in den Unteransprüchen angegeben.

Die Erfindung umfasst eine Werkzeugmaschine, die eine Mehrzahl von Betriebsfunktionen und eine Auswahleinrichtung zur Auswahl einer oder mehrerer Betriebsfunktionen durch einen Nutzer umfasst. Weiterhin umfasst die erfindungsgemäße Werkzeugmaschine eine Empfangseinrichtung zum Empfangen von Daten von einem mobilen Datenträger, eine Feststelleinrichtung zum Feststellen aufgrund der empfangenen Daten, welche Betriebsfunktionen vom Nutzer ausgeführt werden dürfen, und eine Zugriffssteuereinrichtung, die dazu eingerichtet ist, den Zugriff auf die Werkzugmaschine bezüglich der ausgewählten, mindestens einen Betriebsfunktion zu steuern und dem Nutzer den Zugriff nur für diejenigen ausgewählten Betriebsfunktionen zu gewähren, zu deren Ausführung der Nutzer berechtigt ist.

Diese erfindungsgemäße Werkzeugmaschine hat den Vorteil, dass die Daten bezüglich der Zugriffssteuerung von einem mobilen Datenträger bereitgestellt werden. Dadurch können je nach verwendeter Technologie des mobilen Datenträgers die Daten durchaus umfangreich sein, so dass eine Vielzahl von Berechtigungsstufen und mit Hilfe der Daten eine genaue Spezifikation, welcher Nutzer an welcher Werkzeugmaschine welche Betriebsfunktionen ausführen darf, möglich wird. Außerdem kann durch den mobilen Datenträger eine Verbesserung der Handhabbarkeit der Zugriffslösung erreicht werden.

Vorzugsweise umfasst die Empfangseinrichtung ein Lesegerät, das dazu eingerichtet ist, mit einem Transponder auf einem mobilen Datenträger zu interagieren. Vorzugsweise basieren sowohl das Lesegerät als auch der Transponder auf RFID-Technologie (Radio Frequency Identification). Die Empfangseinrichtung kann jedoch auch auf anderen Technologien beruhen. Beispielsweise kann die Empfangseinrichtung einen Barcodescanner umfassen, der mit einem Barcode interagiert. Möglich ist auch, dass die Empfangseinrichtung ein Chipkartenlesegerät bzw. ein Magnetstreifenkartenlesegerät umfasst, das dazu eingerichtet ist, Chipkarten bzw. Magnetstreifenkarten zu lesen. Solche Chipkarten könnten beispielsweise als Speicherkarten oder auch Mikroprozessorkarten ausgeführt sein. Auch eine Realisierung auf Basis eines USB-Ports, der mit einem USB-Speicherstick interagiert, ist möglich.

Erfindungsgemäß umfassen die Daten, die von der Empfangseinrichtung empfangen werden, Berechtigungsdaten, die angeben, welche Betriebsfunktionen der Nutzer an der Werkzeugmaschine ausführen darf. Dies hat den Vorteil, dass unmittelbar aus den Daten Berechtigungen abgeleitet werden können.

Möglich ist, dass die Daten, die von der Empfangseinrichtung empfangen werden, einen Nutzer identifizieren und dass die Feststelleinrichtung Mittel zur Abfrage von Berechtigungsdaten des identifizierten Nutzers umfasst. Beispielsweise ist es möglich, dass ein mobiler Datenträger verwendet wird, der lediglich die Identität des Nutzers aussendet.

Solche mobilen Datenträger könnten beispielsweise in einem Produktionsbetrieb im Einsatz sein, um die gearbeiteten Zeiten der Arbeiter zu erfassen. Bei einem solchen System führen die Arbeiter beim Betreten der Werkshalle ihren mobilen Datenträger an einem Lesegerät vorbei, das einem Stechkartenautomaten ähnelt. Derselbe mobile Datenträger könnte die Nutzeridentifikation an die Werkzeugmaschine senden, die dann aufgrund der Nutzeridentifikation ermittelt, welche Berechtigungen der Nutzer an der entsprechenden Werkzeugmaschine besitzt. Beispielsweise könnte über ein lokales Datennetzwerk die Nutzeridentifikation von der Werkzeugmaschine an einen Server gesendet werden, der aufgrund der Nutzeridentifikation und einem Datenbestand, der Aufschluss über die vom Nutzer belegten Werkzeugmaschinenschulungen gibt, ermittelt, welche Betriebsfunktionen der Nutzer an der jeweiligen Werkzeugmaschine ausführen darf.

In einer bevorzugten Ausführungsform entsprechen die ausgewählte eine oder mehrere Betriebsfunktionen einer Betriebsart der Werkzeugmaschine entsprechend der europäischen Richtlinien und Normen (wie z. B. DIN EN 12417 "Sicherheit von Werkzeugmaschinen - Bear-beitungszentren" und DIN EN 13128 "Sicherheit von Werkzeugmaschinen - Fräs- und Bohrfräsmaschinen"). Mögliche Betriebsarten sind zum Beispiel Automatikbetrieb, Einrichtbetrieb, erweiterter Einrichtbetrieb, Prozessbeobachtung und Servicebetriebsart. Die Erfindung ist jedoch nicht auf diese Betriebsarten beschränkt. Beispielsweise kann eine Betriebsfunktion auch die Aktualisierung von Software oder auch die Administration von auf der Werkzeugmaschine installierten Softwarekomponenten umfassen.

Die Werkzeugmaschine umfasst eine Zuordnungseinrichtung zum Zuordnen von einer oder mehrerer Betriebsfunktionen zu einer Mehrzahl von Berechtigungsstufen. Dies hat den Vorteil, dass Betriebsfunktionen der Werkzeugmaschine in Gruppen zusammengefasst werden können, die Berechtigungsstufen zugeordnet sind. Abhängig von der Zuordnung von Betriebsfunktionen zu Berechtigungsstufen können Berechtigungsstufen zum Beispiel nach der Gefahr bei Ausführung der Betriebsfunktionen oder nach Qualifikation der Nutzer oder anderen Einteilungen der Betriebsfunktionen zugeordnet werden. Weiterhin ermöglicht die Zuordnungseinrichtung zum Zuordnen von Betriebsfunktionen zu Berechtigungsstufen eine Änderung der Zuordnung durch ein Bedienen der Zuordnungseinrichtung zum Zuordnen von Betriebsfunktionen zu Berechtigungsstufen. Die Zuordnung ist somit variabel und kann den Anforderungen angepasst werden.

Die Daten, die von der Empfangseinrichtung empfangen werden, umfassen eine Information über die Berechtigungsstufe eines Nutzers, wobei ein Nutzer mit einer bestimmten Berechtigungsstufe zur Ausführung einer oder mehrerer Betriebsfunktionen berechtigt ist, die der Berechtigungsstufe zugeordnet sind. Dies hat den Vorteil, dass festgestellt werden kann, welche Betriebsfunktionen der Nutzer aufgrund seiner Berechtigungsstufe und der Information, welche Betriebsfunktionen dieser Berechtigungsstufe zugeordnet sind, ausführen darf.

Dabei sind die Berechtigungsstufen hierarchisch angeordnet und ein Nutzer mit einer bestimmten Berechtigungsstufe ist berechtigt, Betriebsfunktionen auszuführen, die der Berechtigungsstufe des Nutzers oder einer Berechtigungsstufe eines niedrigeren Ranges zugeordnet sind.

Erfindungsgemäß ist nur ein Nutzer der Berechtigungsstufe des höchsten Ranges zum Bedienen der Zuordnungseinrichtung zum Zuordnen von Betriebsfunktionen zu Berechtigungsstufen berechtigt.

Außerdem umfasst die Werkzeugmaschine erfindungsgemäß eine Anmeldungseinrichtung zum Anmelden von Nutzern, wobei nur angemeldete Nutzer zur Ausführung von Betriebsfunktionen der Maschine berechtigt sind. Werden von der Empfangseinrichtung Daten eines mobilen Datenträgers eines noch nicht angemeldeten Nutzers empfangen, wird festgestellt, daß der Nutzer nicht zur Ausführung von Betriebsfunktionen der Werkzeugmaschine berechtigt ist.

Dies hat den Vorteil, dass der mobile Datenträger für mehrere der oben beschriebenen Werkzeugmaschinen benutzt werden kann. Selbst wenn der Nutzer eine bestimmte Berechtigungsstufe hat, oder einen mobilen Datenträger mit einer bestimmten Berechtigungsstufe hat, ist somit sichergestellt, dass der Nutzer nicht automatisch an jeder Werkzeugmaschine zur Ausführung von Betriebsfunktionen der jeweiligen Maschine berechtigt ist. Er muss erst angemeldet werden. Auch hier ist es so, dass nur ein Nutzer der höchstrangigen Berechtigungsstufe zum Bedienen der Anmeldungseinrichtung zum Anmelden von Nutzern berechtigt ist.

Dabei ermöglicht die Anmeldungseinrichtung zum Anmelden von Nutzern die Eingabe von veränderlichen Schulungsdaten, wobei die veränderlichen Schulungsdaten angeben, welche Werkzeugmaschinen-Schulungen der anzumeldende Nutzer absolviert hat, und der Nutzer aufgrund der Schulungsdaten zur Ausführung einer oder mehrerer Betriebsfunktionen der Werkzeugmaschine berechtigt ist.

Dies hat den Vorteil, dass für einen Nutzer eine Berechtigung zur Ausführung bestimmter Betriebsfunktionen der Werkzeugmaschine freigeschaltet werden kann, wenn er eine Schulung für die betreffenden Betriebsfunktionen absolviert hat. Die Schulungsdaten sind veränderlich, so dass die Anmeldungseinrichtung zum Anmelden von Nutzern ermöglicht, die Schulungsdaten eines schon angemeldeten Nutzers zu verändern, wenn er eine Schulung absolviert hat. Somit ist es nicht notwendig, einen Nutzer neu anzumelden, wenn er eine Schulung absolviert hat.

Vorzugsweise sind die Schulungsdaten durch einen festgelegten Algorithmus verschlüsselt und die Anmeldungseinrichtung zum Anmelden von Nutzern umfasst ein Mittel zum Entschlüsseln der Schulungsdaten.

Dies hat den Vorteil, dass Missbrauch durch Nutzer oder eine Eingabe von gefälschten Schulungsdaten nicht möglich ist, da der Algorithmus beim Entschlüsseln der Schulungsdaten nur zu sinnvoll entschlüsselten Schulungsdaten führt, wenn die Schulungsdaten korrekt verschlüsselt wurden.

In einer bevorzugten Ausführungsform umfasst die Werkzeugmaschine ein Datenspeichermittel zum Speichern der Anmeldungsdaten, die angeben, welche Nutzer auf der Werkzeugmaschine angemeldet sind.

Dies ist von Vorteil, weil so gespeichert wird, welche Nutzer auf der Werkzeugmaschine schon angemeldet wurden. Somit ist ein wiederholtes Anmelden nicht notwendig.

In einer besonders vorteilhaften Ausführungsform umfasst die Werkzeugmaschine weiterhin ein Mittel zum Übertragen der auf dem Datenspeichermittel gespeicherten Anmeldungsdaten auf ein externes Speichermittel und zum Übertragen der auf einem externen Speichermittel gespeicherten Anmeldungsdaten auf das Datenspeichermittel der Werkzeugmaschine. Besondere Vorteile ergeben sich, wenn das externe Speichermittel ein USB-Speicherstick ist. Dabei müsste das Mittel zum Übertragen der auf dem Datenspeichermittel gespeicherten Daten einen USB-Port umfassen. Es sind allerdings auch andere Ausführungsformen für das externe Speichermittel möglich, wie zum Beispiel Disketten, Magnetstreifenkarten, Chipkarten, portable oder nicht-portable Festplatten und ein mit der Werkzeugmaschine verbundener Server.

Dies hat den Vorteil, dass die Anmeldungsdaten einer Werkzeugmaschine auf das externe Speichermittel übertragen werden können und dann von dem externen Speichermittel auf eine andere Werkzeugmaschine übertragen werden können. Somit ist es möglich, eine Vielzahl von Nutzern auf der anderen Werkzeugmaschine anzumelden, ohne jeden einzelnen mobilen Datenträger eines jeden anzumeldenden Nutzers zu benötigen. Weiterhin ist es möglich, dass das Mittel zum Übertragen der auf dem Datenspeicher gespeicherten Anmeldedaten eine Einrichtung zum drahtlosen Senden und Empfangen von Daten umfasst, so dass auf ein externes Speichermittel verzichtet werden kann und Anmeldungsdaten direkt von einer Werkzeugmaschine auf eine andere Werkzeugmaschine übertragen werden können

Vorzugsweise speichert das Datenspeichermittel der Werkzeugmaschine weiterhin Betriebsdaten, die angeben, welche Betriebsfunktionen die Werkzeugmaschine ausführt, von welchem Nutzer die Betriebsfunktionen der Werkzeugmaschine ausgeführt werden, und wann der Nutzer die Betriebsfunktionen ausführt.

Dies hat den Vorteil, dass zu einem späteren Zeitpunkt zurückverfolgt werden kann, welcher Nutzer zu welchem Zeitpunkt welche Betriebsfunktionen der Werkzeugmaschine ausgeführt hat. Es wird somit ein elektronisches Steuerungslogbuch in die Werkzeugmaschine integriert, mit dem sich die Zeitabfolge und die Art des Steuerungszugriffs auf Betriebsfunktionen durch identifizierte Nutzer automatisch erfassen lassen.

Vorzugsweise umfasst die erfindungsgemäße Werkzeugmaschine Anzeigemittel zu Anzeige, dass der Nutzer nicht zur Ausführung der ausgewählten, mindestens einen Betriebsfunktion berechtigt ist, wenn der Nutzer eine Betriebsfunktion auswählt, zu deren Ausführung er nicht berechtigt ist. Dieses Anzeigemittel kann beispielsweise einen Signalton ausgeben, oder auch ein erscheinendes Fenster auf der Anzeige der Werkzeugmaschine sein. In einer bevorzugten Ausführungsform ist das Anzeigemittel über eine Leuchtdiode in unmittelbarer Nachbarschaft zur Auswahleinrichtung realisiert.

Vorzugsweise ist die Empfangseinrichtung in einem gegen Verschmutzung schützenden Gehäuse angeordnet. Gerade frühere Schlüssellösungen besaßen das Problem der mangelhaften Dichtigkeit gegen Kühlschmierstoffe und Stäube und waren von daher wartungsintensiv und fehleranfällig. Erfindungsgemäß kann die Empfangseinrichtung Daten vorzugsweise drahtlos empfangen, so dass die Empfangseinrichtung in ein Gehäuse integriert werden kann, dass die Empfangseinrichtung gegen den Einfluss von Kühlschmierstoffen und Stäuben abschirmt. Dies verringert den Wartungsaufwand und die Fehleranfälligkeit der Zugriffssteuerungslösung.

Vorzugweise muss zur Ausführung einer vorherbestimmten Betriebsfunktion eine Taste der Auswahleinrichtung durch den Nutzer während der Ausführung der Betriebsfunktion gedrückt gehalten werden. Dies ermöglicht, durch Loslassen der Taste die Betriebsfunktion sofort zu stoppen und stellt sicher, dass die Hand, die die Taste drückt, nicht von den sich bewegenden Teilen der Werkzeugmaschine erfasst werden kann.

An der Werkzeugmaschine kann grundsätzlich auch nach Entfernen des mobilen Datenträgers weiterhin in der ausgewählten Betriebsfunktion gearbeitet werden. Zum Bespiel wird ein einmal gestartetes Programm weiter abgearbeitet, auch wenn der mobile Datenträger entfernt wurde.

In einer bevorzugten Ausführungsform umfasst die Werkzeugmaschine jedoch ein Mittel zum Sperren der Auswahleinrichtung, wenn die Empfangseinrichtung keine Daten empfängt. Dies ermöglicht es, dass der Nutzer der Werkzeugmaschine einfach seinen mobilen Datenträger von der Werkzeugmaschine entfernen kann und auf diese Weise die derzeit ausgewählte Betriebsfunktion nicht mehr erneut gestartet werden kann, ohne dass die Empfangseinrichtung erneut Daten empfängt. Dies ist insbesondere bei Sonderfunktionen sinnvoll, wie z.B. 5-Achsenbearbeitung und damit im Zusammenhang stehende Programmierung, bei denen sichergestellt werden soll, dass bestimmte Funktionen nur durch entsprechend geschultes Personal mit entsprechender Berechtigung ausgeführt werden können.

Vorzugsweise umfasst die Werkzeugmaschine ein Bedienpult, an dem der mobile Datenträger befestigbar ist. Die Befestigung kann beispielsweise durch einen Magneten zum Halten des mobilen Datenträgers realisiert sein. An diesen Magneten kann der Nutzer seinen mobilen Datenträger befestigen, so dass er anschließend die Werkzeugmaschine gemäß seinen Berechtigungen benutzen kann. Zusätzlich oder alternativ zum Halten durch Magnetkraft kann das Halten durch die Form des Bedienpults erreicht werden. Beispielsweise kann seitlich am Bedienpult eine Aufnahme vorgesehen sein, in die der mobile Datenträger eingesteckt werden kann, um dort mechanisch und/oder magnetisch gehalten zu werden.

Eine besonders vorteilhafte Ausführungsform der Werkzeugmaschine umfasst eine Anzeigevorrichtung zur Anzeige mindestens eines Elements aus der Gruppe von Daten, umfassend Betriebsfunktionen, die gemäß der empfangenen Daten ausgeführt werden dürfen, ausgewählte Betriebsfunktionen und aktueller Zustand, in dem sich die Werkzeugmaschine befindet. Diese Anzeigevorrichtung gibt dem Nutzer einen Überblick über den aktuellen Handlungsspielraum und Handlungsbedarf an der Werkzeugmaschine. In einer besonders vorteilhaften Ausführungsform ist diese Anzeigevorrichtung mit der Auswahleinrichtung integriert. Dies kann beispielsweise durch Leuchtdioden geschehen, die in unmittelbarer Nachbarschaft zu den Tasten der Auswahleinrichtung angeordnet sind.

Vorzugsweise besteht die Auswahleinrichtung aus Tasten, wobei mit jeder Taste vorzugsweise jeweils eine Betriebsfunktion ausgewählt werden kann. Vorzugsweise reagiert jede einzelne Taste bei Anwahl durch den Nutzer nur dann, wenn der Nutzer die Berechtigung besitzt zur Ausführung der Betriebsfunktion, die durch die Taste angewählt wird. Daher können die Tasten auch als Berechtigungstasten bezeichnet werden.

Vorzugsweise zeigt die Anzeigevorrichtung der Werkzeugmaschine eine Warnanzeige an, wenn die Empfangseinrichtung die Daten von dem mobilen Datenträger nicht vollständig empfängt, um den Nutzer aufmerksam zu machen, dass die Daten seines mobilen Datenträgers nicht vollständig empfangen werden können. Dies kann wahlweise durch die Anzeige eines Warntextes oder durch eine Anzeige von Symbolen erfolgen.

Dies hat den Vorteil, dass der Nutzer darauf aufmerksam gemacht wird, wenn der Empfang der Daten von seinem mobilen Datenträger nicht vollständig möglich ist, weil der Datenträger zum Beispiel defekt ist oder falsch benutzt wird, indem er zum Beispiel nicht korrekt an die Werkzeugmaschine angelegt wird. Es ist allerdings weiterhin möglich, dass die Empfangseinrichtung erst nach mehreren gescheiterten Empfangsversuchen die Warnanzeige anzeigt.

Vorzugsweise ist die Anzeigevorrichtung der Werkzeugmaschine weiterhin dazu eingerichtet, einen veränderlichen Anzeigetext anzuzeigen, und die Werkzeugmaschine umfasst eine Erstellungseinrichtung zum Erstellen von veränderlichen Anzeigetexten und zum Zuordnen von veränderlichen Anzeigetexten zu Nutzern, wobei die Feststelleinrichtung aufgrund der empfangenen Daten feststellt, welcher veränderliche Anzeigetext von der Anzeigevorrichtung angezeigt werden soll.

Dies hat den Vorteil, dass für jeden Nutzer individuelle Anzeigetexte erstellt werden können. Somit ist es zum Beispiel möglich, Anzeigetexte in der Sprache des Nutzers zu erstellen, wenn die Maschine von Nutzern betätigt wird, die unterschiedliche Sprachen sprechen. Es ist weiterhin möglich, dass die Erstellungseinrichtung zum Erstellen von Anzeigetexten und zum Zuordnen von Anzeigetexten zu Nutzern nur von Nutzern der Berechtigungsstufe des höchsten Ranges betätigt werden darf.

Weiterhin umfasst die Erfindung eine Berechtigungsdatenbereitstellungsvorrichtung zum Bereitstellen von Daten zum Empfangen auf einer erfindungsgemäßen Werkzeugmaschine. Vorzugsweise umfasst diese Berechtigungsdatenbereitstellungsvorrichtung einen mobilen Datenträger, der dazu eingerichtet ist, mit einer erfindungsgemäßen Werkzeugmaschine zu interagieren. Der mobile Datenträger umfasst Speichermittel zum Speichern von Daten, anhand derer feststellbar ist, welche Betriebsfunktionen vom Nutzer ausgeführt werden dürfen.

Diese Berechtigungsdatenbereitstellungsvorrichtung hat den Vorteil, dass sie Daten bereitstellen kann, anhand derer die Zugriffssteuereinrichtung der Werkzeugmaschine den Zugriff auf die Werkzeugmaschine steuern kann.

Vorzugsweise ist der mobile Datenträger ein Transponder. Besondere Vorteile ergeben sich, wenn dieser Transponder auf der Basis von RFID-Technologie realisiert ist. Der mobile Datenträger kann jedoch auch eine Magnetstreifenkarte, eine Chipkarte, ein Barcode, ein USB-Speicherstick oder dergleichen sein.

Vorzugsweise umfasst die Berechtigungsdatenbereitstellungsvorrichtung Mittel zum Ermitteln von Berechtigungsdaten aufgrund einer Nutzeridentifikation und von Daten, die davon abhängen, welche Werkzeugmaschinenschulungen der durch die Nutzeridentifikation identifizierte Nutzer absolviert hat.

Dieses Mittel ermöglicht es einerseits, dass ein Administrator eine Nutzeridentifikation eingeben kann und so die Berechtigungsdaten des Nutzers erhält. Andererseits kann eine Werkzeugmaschine, deren Empfangseinrichtung lediglich eine Nutzeridentifikation empfangen hat, mit Hilfe dieses Mittels beispielsweise über ein lokales Datennetzwerk herausfinden, welche Betriebsfunktionen der Nutzer an der Werkzeugmaschine ausführen darf.

Vorzugsweise umfasst die Berechtigungsdatenbereitstellungsvorrichtung Mittel zum Speichern der Berechtigungsdaten in dem Speichermittel des mobilen Datenträgers. Auf diese Weise kann der mobile Datenträger die Berechtigungsdaten, direkt an die Empfangseinrichtung übertragen, so dass eine zusätzliche Abfrage unterbleiben kann.

Vorzugsweise geben die Berechtigungsdaten für mehr als eine Werkzeugmaschine an, welche Betriebsfunktionen der Nutzer auf der jeweiligen Werkzeugmaschine ausführen darf. Auf diese Weise braucht der Nutzer, auch wenn er viele unterschiedliche Werkzeugmaschinen in einer Werkzeughalle verwendet, jeweils nur einen einzigen mobilen Datenträger, mit dessen Hilfe er Zugriff zu allen Werkzeugmaschinenfunktionen erhalten kann, zu deren Ausführung er beispielsweise aufgrund absolvierter Werkzeugmaschinenschulungen berechtigt ist.

Wie bereits oben verdeutlicht, können die Betriebsfunktionen, die der Nutzer ausführen darf, einer oder mehreren Betriebsarten im Sinne der europäischen Richtlinien und Normen entsprechen.

Vorzugsweise umfasst der mobile Datenträger Anzeigemittel zum Anzeigen, welche Berechtigungsdaten den auf dem mobilen Datenträger gespeicherten Daten entsprechen. Dies kann beispielsweise durch einen Aufdruck oder durch eine Leuchtdiodenanzeige erfolgen. Insbesondere, wenn das Speichermittel zum Speichern von Daten unveränderliche Daten enthält, bietet es sich an, dass der mobile Datenträger einen Aufdruck umfasst, der dem Nutzer Informationen über die unveränderlichen Daten bereitstellt.

Vorzugsweise ist es möglich, den Nutzer anhand der unveränderlichen Daten, die im Speichermittel des mobilen Datenträgers gespeichert sind eindeutig zu identifizieren. So können die unveränderlichen Daten eindeutig einem Nutzer zugeordnet werden und der Nutzer, der Betriebsfunktionen der Werkzeugmaschine ausführt, ist eindeutig identifiziert, nachdem das Empfangsgerät der Werkzeugmaschine die unveränderlichen Daten empfangen hat.

Erfindungsgemäß enthalten die unveränderlichen Daten eine Information, welche Berechtigungsstufe der Nutzer hat. Somit kann nur aufgrund der empfangenen unveränderlichen Daten in der Empfangseinrichtung durch die Feststelleinrichtung festgestellt werden, welche Betriebsfunktionen der Nutzer ausführen darf oder nicht ausführen darf. Ein weiterer Abgleich mit weiteren Nutzer-spezifischen oder allgemeinen gespeicherten Berechtigungsdaten ist nicht notwendig.

In einer Ausführungsform der Erfindung umfasst die Berechtigungsdatenbereitstellungsvorrichtung Mittel zum Speichern einer Nutzeridentifikation in dem Speichermittel.

Vorzugsweise umfasst der mobile Datenträger einen Magneten zur Befestigung des mobilen Datenträgers an einer erfindungsgemäßen Werkzeugmaschine. Auf diese Weise kann der mobile Datenträger einfach in der Nähe der Empfangseinrichtung der Werkzeugmaschine gehalten werden.

In einer bevorzugten Ausführungsform umfasst die Berechtigungsdatenbereitstellungsvorrichtung zusätzlich eine Einrichtung zum Befestigen des mobilen Datenträgers an einem Schlüsselring. Auf diese Weise kann der Nutzer den mobilen Datenträger einfach und sicher an seinem Schlüsselbund mitführen.

Vorteilhafte Ausgestaltungen und weitere Details der vorliegenden Erfindung werden im Folgenden anhand verschiedener Ausführungsbeispiele mit Bezug auf die Figuren beschrieben.
Fig. 1 zeigt schematisch eine Ausführungsform einer erfindungsgemäßen Werkzeugmaschine.
Fig. 2 zeigt eine Ausführungsform einer erfindungsgemäßen Anzeigevorrichtung.
Fig. 3 zeigt eine Ausführungsform einer Berechtigungsdatenbereitstellungsvorrichtung.
Fig. 4 zeigt eine Draufsicht auf eine Ausführungsform eines mobilen Datenträgers.
Fig. 5 zeigt eine Seitenansicht auf eine Ausführungsform eines mobilen Datenträgers.
Fig. 6 zeigt schematisch eine weitere Ausführungsform einer erfindungsgemäßen Werkzeugmaschine.

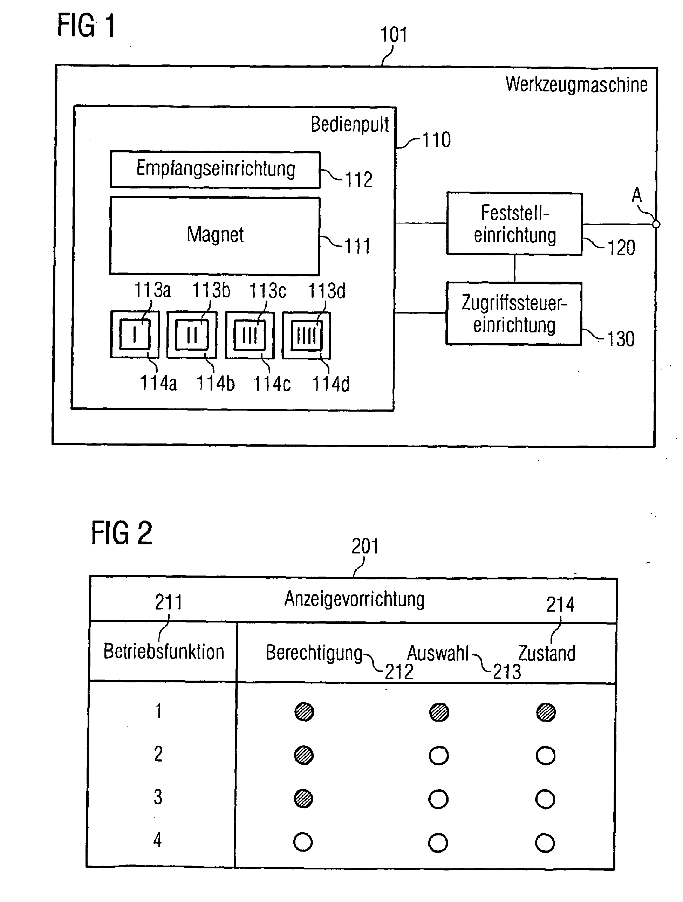

Fig. 1 zeigt eine Ausführungsform einer erfindungsgemäßen Werkzeugmaschine 101 als vereinfachtes Schema. Die Werkzeugmaschine 101 umfasst ein Bedienpult 110. Das Bedienpult 110 umfasst einen Magneten 111, eine Empfangseinrichtung 112, eine Auswahleinrichtung 113a - 113d und eine Anzeigevorrichtung 114a - 114d. Der Magnet 111 kann dazu verwendet werden, um daran einen mobilen Datenträger zu befestigen. Der mobile Datenträger sendet Daten an die Empfangseinrichtung 112. Mit Hilfe der Tasten 113a - 113d, die zu einer Auswahleinrichtung gehören, kann der Nutzer eine oder mehrere Betriebsfunktionen auswählen. Vorzugsweise reagiert jede einzelne Taste 113a - 113d, mit deren Hilfe vorzugsweise jeweils eine Betriebsfunktion ausgewählt werden kann, nur dann, wenn der Nutzer gemäß den durch die Empfangseinrichtung 112 empfangenen Daten die Berechtigung besitzt zur Ausführung der Betriebsfunktion, die durch die Taste angewählt wird. Insofern kann diese Taste auch als Berechtigungstaste bezeichnet werden. Die Tasten sind im gezeigten Ausführungsbeispiel jeweils von einer Leuchtdiode 114a - 114d umrandet. Diese Leuchtdioden können verwendet werden, um dem Nutzer anzuzeigen, welche Betriebsfunktionen vom Nutzer ausgeführt werden dürfen (beispielsweise durch die Farbe grün), welche Betriebsfunktionen ausgewählt sind (beispielsweise durch ein Blinken) und in welchem Zustand sich die Werkzeugmaschine derzeit befindet (beispielsweise durch einen leuchtenden andersfarbigen Punkt, der die entsprechende Taste umläuft).

Die Werkzeugmaschine 101 umfasst weiterhin eine Feststelleinrichtung 120 und eine Zugriffssteuereinrichtung 130. Die Feststelleinrichtung 120 stellt aufgrund der Daten, die die Empfangseinrichtung 112 empfangen hat, fest, welche Betriebsfunktionen vom Nutzer ausgeführt werden dürfen. Auf Basis dieser Feststellung steuert die Zugriffssteuereinrichtung 130 den Zugriff auf die Werkzeugmaschine, indem sie dem Nutzer den Zugriff nur für diejenigen ausgewählten Betriebsfunktionen gewährt, zu deren Ausführung der Nutzer berechtigt ist. Zur Feststellung der Berechtigungen kann die Feststelleinrichtung 120 über eine Schnittstelle A, beispielsweise über ein lokales Datennetzwerk, auf einen Server zugreifen, an dem mit Hilfe der Nutzeridentifikation die Berechtigungen des identifizierten Nutzers abgefragt werden können.

Fig. 2 zeigt eine weitere Ausführungsform einer erfindungsgemäßen Anzeigevorrichtung, wie sie beispielsweise auf dem Bildschirm einer Werkzeugmaschine als Fenster angezeigt werden könnte. Die Anzeigevorrichtung 201 umfasst vier Spalten, eine Spalte 211 zur Anzeige der Betriebsfunktion, eine Spalte 212 für die Anzeige, welche Betriebsfunktionen vom Nutzer ausgeführt werden dürfen, eine Spalte 213 zur Anzeige, welche Betriebsfunktion vom Nutzer gerade ausgewählt wurde, und eine Spalte 214, die anzeigt, in welchem Zustand sich die Werkzeugmaschine aktuell befindet. Wie Fig. 2 zeigt, ist in dem dargestellten Beispiel der Nutzer berechtigt, die Betriebsfunktionen 1, 2 und 3 auszuführen. Ausgewählt ist gerade die Betriebsfunktion 1 und die Werkzeugmaschine befindet sich gerade in diesem Zustand.

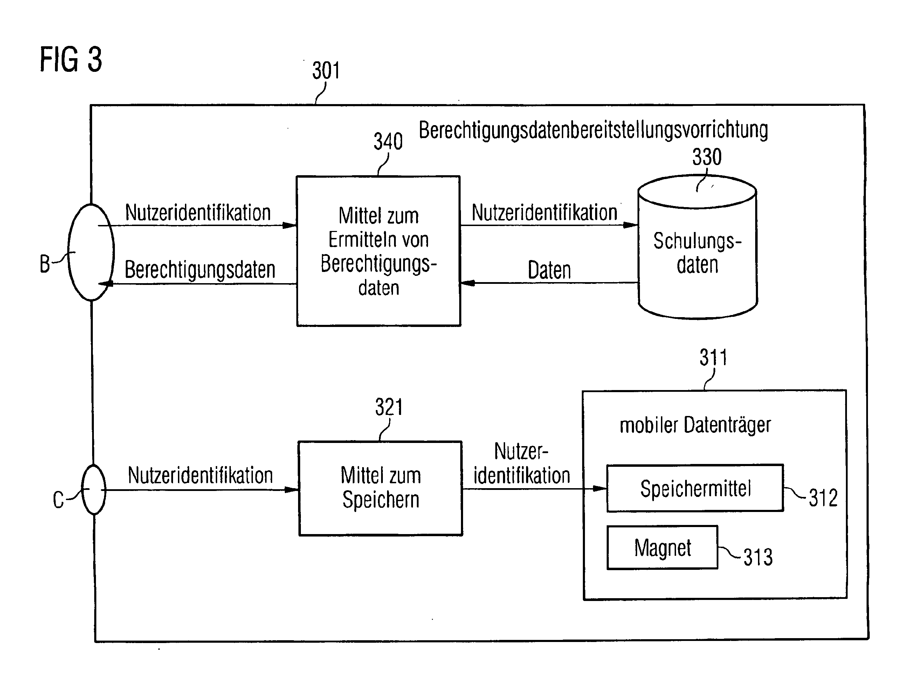

Fig. 3 zeigt ein Ausführungsbeispiel einer erfindungsgemäßen Berechtigungsdatenbereitstellungsvorrichtung. Die Berechtigungsdatenbereitstellungsvorrichtung 301 umfasst ein Mittel zum Speichern 321 und einen mobilen Datenträger 311, der wiederum ein Speichermittel 312 und einen Magneten 313 umfasst. Über die Schnittstelle C kann dem Mittel zum Speichern 321 eine Nutzeridentifikation mitgeteilt werden, die dieses Mittel dann in das Speichermittel 312 des mobilen Datenträgers 311 speichert. Auf diese Weise ist der mobile Datenträger dazu konfiguriert, die Nutzeridentität des Nutzers auszusenden. Mit Hilfe des Magneten 313 kann der mobile Datenträger 311 an einer Werkzeugmaschine angebracht werden, so dass der mobile Datenträger die gespeicherte Nutzeridentifikation an die Empfangseinrichtung der Werkzeugmaschine senden kann.

Weiterhin umfasst das gezeigte Ausführungsbeispiel einer Berechtigungsdatenbereitstellungsvorrichtung 301 eine Datenbank 330, die Schulungsdaten enthält, und ein Mittel zum Ermitteln von Berechtigungsdaten 340. Eine Werkzeugmaschine, die von dem mobilen Datenträger eine Nutzeridentifikation empfängt, kann über die Schnittstelle B eine Anfrage an das Mittel zum Ermitteln von Berechtigungsdaten 340 schicken. Diese Anfrage wird beispielsweise über ein lokales Datennetzwerk an die Berechtigungsdatenbereitstellungsvorrichtung 301 geschickt und umfasst die Nutzeridentifikation. Anhand der Nutzeridentifikation fragt das Mittel zum Ermitteln von Berechtigungsdaten 340 bei der Datenbank 330 entsprechende Daten ab, ermittelt aus den Daten der Schulungsdatenbank 330 die entsprechenden Berechtigungsdaten und gibt diese über die Schnittstelle B an die Werkzeugmaschine zurück. Auf diese Weise kann die Werkzeugmaschine nur aufgrund einer Nutzeridentifikation die entsprechenden Berechtigungsdaten erfragen.

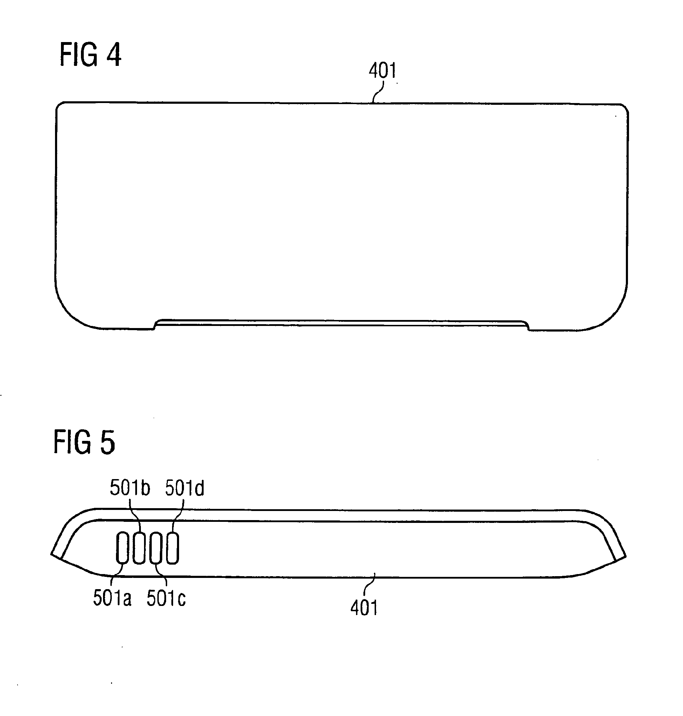

Fig. 4 zeigt eine Draufsicht auf eine Ausführungsform eines erfindungsgemäßen mobilen Datenträgers. Der mobile Datenträger 401 enthält einen Transponder, der mit einer Empfangseinrichtung 112 drahtlos kommuniziert. Aufgrund der drahtlosen Kommunikation kann die äußere Geometrie schlicht gehalten werden.

Fig. 5 zeigt eine Seitenansicht des mobilen Datenträgers 401. In dem gezeigten Ausführungsbeispiel befinden sich seitlich auf dem mobilen Datenträger 401 vier Leuchtdioden 501 a - 501d, die dem Nutzer anzeigen, welche Berechtigungen er besitzt.

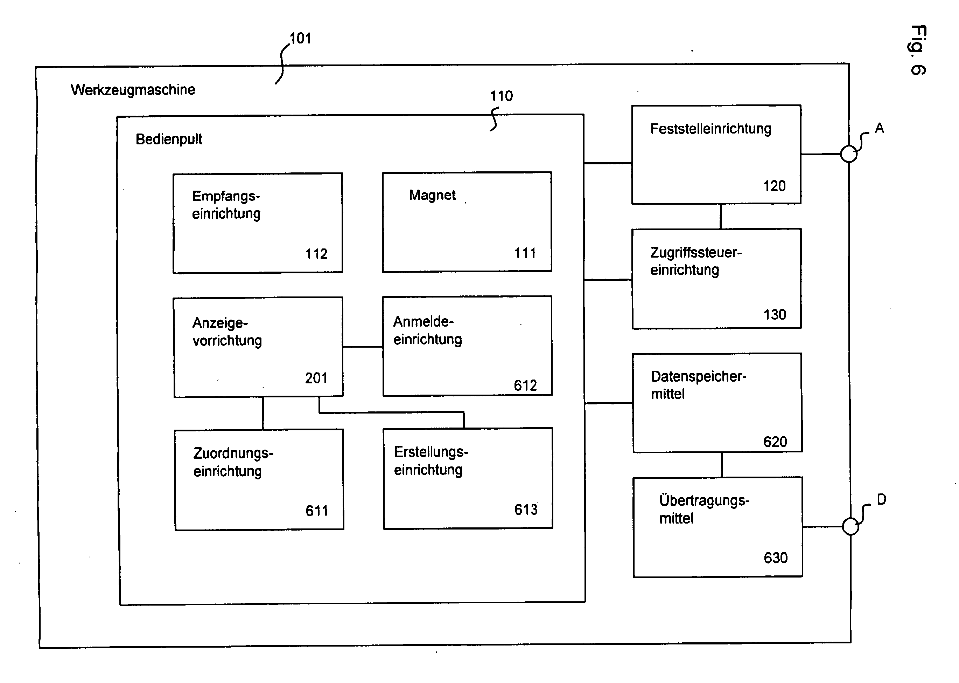

Fig. 6 zeigt eine weitere Ausführungsform einer erfindungsgemäßen Werkzeugmaschine 101 als vereinfachtes Schema. Die Werkzeugmaschine 101 umfasst ein Bedienpult 110, eine mit einer Schnittstelle A verbundene Feststelleinrichtung 120, eine Zugriffssteuereinrichtung 130, ein Datenspeichermittel 620 und ein Übertragungsmittel 630 zum Übertragen von Daten, die auf dem Datenspeichermittel gespeichert sind, auf ein externes Speichermittel. Dafür ist eine Schnittstelle D in der Werkzeugmaschine vorgesehen.

Das Bedienpult 110 umfasst einen Magneten 111, eine Empfangseinrichtung 112 und eine Anzeigevorrichtung 201. Weiterhin umfasst das Bedienpult 110 eine Zuordnungseinrichtung 611, die durch Betätigung einem Nutzer das Zuordnen von Betriebsfunktionen zu Berechtigungsstufen ermöglicht, wenn dieser Nutzer eine Berechtigungsstufe hat, die ihn zum Ausführen der Betriebsfunktion des Zuordnens von Betriebsfunktionen zu Berechtigungsstufen berechtigt. Das Bedienpult 110 umfasst zusätzlich eine Anmeldeeinrichtung 612, die es einem Nutzer, durch Betätigung ermöglicht, andere Nutzer auf der Werkzeugmaschine 101 anzumelden. Die Betätigung der Anmeldungseinrichtung 612 erfordert, dass der Nutzer zur Ausführung der Betriebsfunktion des Anmeldens von anderen Nutzern an der Werkzeugmaschine berechtigt ist. Die Feststelleinrichtung 120 der Werkzeugmaschine ist dazu eingerichtet, festzustellen, ob ein Nutzer auf der Werkzeugmaschine angemeldet ist, wenn Daten von dem mobilen Datenträger 311 dieses Nutzers von der Empfangseinrichtung 112 empfangen werden. Ist ein Nutzer nicht auf der Werkzeugmaschine angemeldet, wird festgestellt, dass er nicht zur Ausführung von Betriebsfunktionen der Werkzeugmaschine berechtigt ist. Weiterhin umfasst das Bedienpult 110 eine Erstellungseinrichtung 613, die es einem Nutzer durch Betätigung der Erstellungseinrichtung 613 ermöglicht, veränderliche Anzeigetexte zu erstellen und die Anzeigetexte auf der Werkzeugmaschine angemeldeten Nutzern zuzuordnen. Die erstellten Anzeigetexte können von der Anzeigevorrichtung 201 automatisch angezeigt werden, wenn ein auf der Werkzeugmaschine angemeldeter Nutzer seinen mobilen Datenträger 311 an den Magneten 111 anbringt und die Daten von dem mobilen Datenträger 311 von der Empfangseinrichtung 112 empfangen werden.

Auf dem Speichermittel 312 eines mobilen Datenträgers 311 nach einem weiteren Ausführungsbeispiel der vorliegenden Erfindung sind unveränderliche Daten in binärer Form gespeichert. Dabei bezeichnen die ersten vier Bits der unveränderlichen Daten die Information über die Berechtigungsstufe des Nutzers des mobilen Datenträgers 311. Die Möglichkeiten für die Berechtigungsstufen umfassen eine Master-Berechtigungsstufe, eine Service-Berechtigungsstufe und eine Mehrzahl von weiteren Berechtigungsstufen. Die Master-Berechtigungsstufe stellt die höchstrangige Berechtigungsstufe dar, also die Berechtigungsstufe des höchsten Ranges in der hierarchischen Reihenfolge der Berechtigungsstufen. Ein Nutzer mit einer bestimmten Berechtigungsstufe zum Ausführen verschiedener Betriebsfunktionen der Werkzeugmaschine 101 hat einen mobilen Datenträger 311 mit unveränderlichen Daten, die in den ersten vier Bits die Information über die Berechtigungsstufe des Nutzers einschließt. Mit einem mobilen Datenträger 311 einer bestimmten Berechtigungsstufe ist der Nutzer berechtigt, Betriebsfunktionen seiner Berechtigungsstufe und der Berechtigungsstufen mit einem niedrigeren Rang auszuführen. Somit ist ein Nutzer der Master-Berechtigungsstufe berechtigt, alle Betriebsfunktionen der Werkzeugmaschine 101 auszuführen. Dieser Nutzer wird weiterhin nur als Master bezeichnet. Der Master darf zum Beispiel auch die Betriebsfunktionen des Anmeldens von Nutzern und des Zuordnens von Betriebsfunktionen zu Berechtigungsstufen an der Anmeldeeinrichtung 612 zum Anmelden von Nutzern an der Werkzeugmaschine 101 ausführen. Ein Nutzer der Service-Berechtigungsstufe ist berechtigt, andere Nutzer anzumelden und einen Servicebetrieb der Werkzeugmaschine auszuführen. Dieser Servicebetrieb der Werkzeugmaschine 101 schließt zum Beispiel eine Steuerung einer Arbeitsfunktion der Werkzeugmaschine 101 bei verringerter Geschwindigkeit und bei geöffneten Schutzvorrichtungen der Werkzeugmaschine 101 ein.

Die weiteren Bits der unveränderlichen Daten, die auf dem mobilen Datenträger 311 in binärer Form gespeichert sind, stellen eindeutige einzigartige unveränderliche Daten dar und werden im Folgenden als Unikatsnummer bezeichnet. Da dieser Anteil der unveränderlichen Daten eindeutig und einzigartig ist, kann jeder einzelne mobile Datenträger 311 nach diesem Ausführungsbeispiel der Erfindung eindeutig durch die auf dem mobilen Datenträger 311 gespeicherten Unikatsnummer identifiziert werden. Jede Unikatsnummer ist somit eindeutig einem bestimmten mobilen Datenträger 311 zugeordnet und umgekehrt.

Alternativ stellen nach einem weiteren Ausführungsbeispiel der vorliegenden Erfindung auch alle Bits der unveränderlichen Daten, einschließlich der ersten vier Berechtigungsstufen-Bits, die Unikatsnummer dar. Somit enthält die Unikatsnummer nach diesem Ausführungsbeispiel eine Information über die Berechtigungsstufe des Nutzers.

In einem Ausführungsbeispiel des mobilen Datenträgers 311 ist die Unikatsnummer in dezimaler Schreibweise außen sichtbar auf dem mobilen Datenträger 311 aufgedruckt.

In einem weiteren Ausführungsbeispiel des mobilen Datenträgers 311 umfasst der mobile Datenträger 311 einen Transponder. Sobald der mobile Datenträger 311 an die Werkzeugmaschine 101 angelegt wird, werden alle Bits der unveränderlichen Daten, die auf dem mobilen Datenträger 311 gespeichert sind, von dem Transponder an die Empfangseinrichtung 112 der Werkzeugmaschine 101 übertragen. Dabei werden immer alle Bits der unveränderlichen Daten vollständig übertragen. Sollte die vollständige Übertragung der Bits scheitern, wird die Übertragung aller Bits, also der vollständigen unveränderlichen Daten, solange wiederholt, bis alle Bits einmal komplett und vollständig übertragen wurden. Erst, wenn alle Bits vollständig übertragen wurden, kann die Feststelleinrichtung 120 feststellen, welche Betriebsfunktionen vom Nutzer ausgeführt werden dürfen.

Nach einem weiteren Ausführungsbeispiel der Werkzeugmaschine 101 ist die Anzahl der Wiederholungen der Übertragungsversuche begrenzt. Sollte eine komplette Übertragung aller Bits der unveränderlichen Daten des mobilen Datenträgers 311 nach einer bestimmten Anzahl von wiederholten Übertragungsversuchen nicht funktioniert haben, wird der Nutzer über die Anzeigevorrichtung 201 darüber informiert, dass die Übertragung der Daten nicht funktioniert. Zu diesem Zweck wird ein Warnhinweis in der Anzeigevorrichtung 201 angezeigt, der den Nutzer darüber informiert, dass die unveränderlichen Daten von seinem mobilen Datenträger 311 nicht empfangen werden können. Der Nutzer kann dann feststellen, ob sein mobiler Datenträger 311 defekt ist oder ob er den mobilen Datenträger 311 nicht korrekt angelegt hat.

In einem weiteren Ausführungsbeispiel der Werkzeugmaschine 101 wird nach Anlegen des mobilen Datenträgers und vollständigem Empfangen der unveränderlichen Daten durch die Empfangseinrichtung 112 die Berechtigungsstufe des Nutzers des mobilen Datenträgers in der Anzeigevorrichtung 201 angezeigt.

In einem alternativen Ausführungsbeispiel der Werkzeugmaschine 101 zeigt die Anzeigevorrichtung 201 eine Zugriffsstufe des Nutzers auf Betriebsfunktionen der Werkzeugmaschine 101, wobei einer Zugriffsstufe wie einer Berechtigungsstufe eine oder mehrere der Betriebsfunktionen der Werkzeugmaschine 101 zugeordnet sind. Dabei darf der Nutzer Betriebsfunktionen ausführen, die seiner Zugriffsstufe oder einer Zugriffsstufe eines niedrigeren Ranges als seiner Zugriffsstufe zugeordnet sind. Hierbei ist die Zuordnung von Betriebsfunktionen zu Berechtigungsstufen und zu Zugriffsstufen nicht identisch. Durch die Einführung einer zweiten Zuordnungsmöglichkeit von Betriebsfunktionen können Zuordnungen nach verschiedenen Gesichtspunkten eingeführt werden. Zum Beispiel kann die Zuordnung zu Berechtigungsstufen nach Gesichtspunkten der Gefahr bei Ausführen der Betriebsfunktionen und die Zuordnung zu Zugriffsstufen nach Qualifikation des Nutzers zugeordnet werden oder umgekehrt.

In einem Ausführungsbeispiel der Werkzeugmaschine 101 umfasst die Werkzeugmaschine 101 eine Anmeldeeinrichtung 612 zum Anmelden von Nutzern. Die Betätigung der Anmeldeeinrichtung 612 ist nur einem Nutzer der Berechtigungsstufe Master oder der Service-Berechtigungsstufe erlaubt. Nutzer mit Berechtigungsstufen eines niedrigeren Ranges haben nur dann eine Berechtigung für das Ausführen von Betriebsfunktionen der Werkzeugmaschine 101, wenn sie vorher an der Werkzeugmaschine angemeldet wurden. Um einen Nutzer an der Werkzeugmaschine anzumelden, betätigt der Master die Anmeldeeinrichtung 612 zum Anmelden von Nutzern. Dazu muss er erst seinen mobilen Datenträger 311 an die Werkzeugmaschine 101 anlegen, damit die Feststelleinrichtung 120 feststellen kann, dass er für das Betätigen der Anmeldeeinrichtung 612 zum Anmelden von Nutzern berechtigt ist. Bei Betätigung der Anmeldeeinrichtung 612 zum Anmelden von Nutzern wird eine Tabelle in der Anzeigevorrichtung 201 angezeigt. Diese Tabelle enthält Informationen, welche Nutzer schon auf der Werkzeugmaschine 101 angemeldet sind, indem die Unikatsnummer der angemeldeten Nutzer in der Tabelle eingetragen sind. Wird nun der mobile Datenträger 311 eines noch unangemeldeten Nutzers an die Werkzeugmaschine 111 angelegt, nachdem der mobile Datenträger 311 des Masters entfernt wurde, so ist die Anzeigevorrichtung 201 dazu eingerichtet, die Unikatsnummer des mobilen Datenträgers 311 des noch nicht angemeldeten Nutzers in der Tabelle in der Anzeigevorrichtung 201 automatisch anzuzeigen, nachdem die Empfangseinrichtung 112 die Unikatsnummer vom mobilen Datenträger 311 empfangen hat.

In einem weiteren Ausführungsbeispiel der Werkzeugmaschine 101 ist die Anmeldeeinrichtung 612 für das Anmelden von Nutzern dazu eingerichtet, neben den wie oben beschriebenen Betätigungsschritten noch das Eingeben veränderlicher Daten in die Anzeige der Tabelle neben die Anzeige der Unikatsnummer zu ermöglichen. Diese veränderlichen Daten enthalten Schulungsdaten und werden im Folgenden Freischaltcode genannt. Der Freischaltcode enthält verschlüsselte Daten, welche Schulungen der Nutzer absolviert hat. Dieser Freischaltcode erlaubt das Freischalten von Betriebsfunktionen in Abhängigkeit von der Qualifikation des Nutzers. Der Freischaltcode ist durch einen vorbestimmten Verschlüsselungsalgorithmus verschlüsselt und durch Rückrechnung des Verschlüsselungsalgorithmus kann die Feststelleinrichtung 120 feststellen, welche Betriebsfunktionen für den Nutzer aufgrund der absolvierten Werkzeugschulungen freigeschaltet werden sollen. Die Anmeldeeinrichtung 612 zum Anmelden von Nutzern ermöglicht weiterhin das Eingeben eines neuen Freischaltcode durch Betätigung der Anmeldeeinrichtung 612 für das Anmelden von Nutzern, für die schon eine alter Freischaltcode in der Tabelle angezeigt wird. Nach erneuter Rückrechnung des Verschlüsselungsalgorithmus werden so weitere Betriebsfunktionen freigeschaltet. Die Unikatsnummer geht in den Verschlüsselungsalgorithmus ein und ist aus dem Freischaltcode eindeutig decodierbar. Da die Unikatsnummer zusätzlich zum Freischaltcode durch Betätigung der Anmeldeeinrichtung 612 in die Tabelle in der Anzeigevorrichtung 201 eingegeben werden kann, kann somit verhindert werden, dass Fehler bei der Eingabe passieren und festgestellt werden kann, ob Unikatsnummer und Freischaltcode zusammenpassen. Da die Berechtigungsstufe des Nutzers durch die ersten vier Bits der unveränderlichen Daten seines mobilen Datenträgers 311 festgelegt ist, können nur weitere Betriebsfunktionen dieser Berechtigungsstufe oder Berechtigungsstufen eines niedrigeren Ranges freigeschaltet werden.

Die vorliegende Erfindung umfasst die Werkzeugmaschine 101 eine Zuordnungseinrichtung 611 zum Zuordnen von einer oder mehreren Betriebsfunktionen zu einer Mehrzahl von Berechtigungsstufen. Der Master ist berechtigt, diese Zuordnungseinrichtung 611 zu betätigen. Hierbei kann er die Zuordnung von Betriebsfunktionen zu Berechtigungsstufen ändern.

In einem weiteren Ausführungsbeispiel der vorliegenden Erfindung umfasst die Werkzeugmaschine 101 ein Datenspeichermittel 620 zum Speichern von Anmeldungsdaten, die angeben, welche Nutzer vom Master angemeldet worden sind. Wenn der Master beim Anmelden des Nutzers den Freischaltcode eingibt, wird der Freischaltcode ebenfalls im Datenspeichermittel 620 gespeichert. Die Daten, die im Datenspeichermittel 620 gespeichert sind, können in einer Tabelle in der Anzeigevorrichtung 201 angezeigt werden. Weiterhin umfasst die Werkzeugmaschine ein Übertragungsmittel 630 zum Übertragen der auf dem Datenspeichermittel 620 gespeicherten Anmeldungsdaten auf einen externen USB-Speicherstick und zum Übertragen der auf dem USB-Speicherstick gespeicherten Anmeldungsdaten auf das Datenspeichermittel 620 der Werkzeugmaschine. Somit kann der Master alle Anmeldungsdaten, die in dem Datenspeichermittel 620 der Werkzeugmaschine gespeichert sind, mit Hilfe eines USB-Speichersticks auf eine andere Werkzeugmaschine übertragen. Somit muss der Master nicht alle auf der Werkzeugmaschine angemeldeten Nutzer erneut einzeln auf der anderen Werkzeugmaschine anmelden, sondern kann die Anmeldung der Nutzer durch das Übertragen der Anmeldungsdaten von dem USB-Speicherstick auf das Datenspeichermittel 620 der Werkzeugmaschine durchführen. In diesem Ausführungsbeispiel ist die Schnittstelle D aus Fig. 6 ein USB-Port.

In einem weiteren Ausführungsbeispiel der Werkzeugmaschine der vorliegenden Erfindung kann das Datenspeichermittel 620 weiterhin Betriebsdaten speichern, die angeben, welche Betriebsfunktionen die Werkzeugmaschine ausgeführt hat, welcher Nutzer diese Betriebsfunktionen der Werkzeugmaschine ausgeführt hat, und wann der Nutzer diese Betriebsfunktionen ausgeführt hat. Somit ist es möglich, wie mit einem Steuerungslogbuch festzuhalten, wer wann welche Betriebsfunktionen auf der Werkzeugmaschine durchgeführt hat.

In einem weiteren Ausführungsbeispiel der Werkzeugmaschine der vorliegenden Erfindung umfasst die Werkzeugmaschine eine Erstellungseinrichtung 613 zum Erstellen von veränderlichen Anzeigetexten und zum Zuordnen von Anzeigetexten zu Nutzern. Diese Erstellungseinrichtung 613 darf nur von dem Master betätigt werden. Der Master kann durch Betätigen der Zuordnungseinrichtung 613 individuelle veränderliche Anzeigetexte für jeden auf der Werkzeugmaschine angemeldeten Nutzer erstellen. Legt dann ein Nutzer seinen mobilen Datenträger 311 an die Werkzeugmaschine 101 an, kann dann von der Feststelleinrichtung 120 aufgrund der empfangenen Daten festgestellt werden, welcher Anzeigetext dem Nutzer zugeordnet ist, und dieser Anzeigetext wird dann in der Anzeigevorrichtung 201 angezeigt. Dies ermöglicht individuelle Anzeigetexte für jeden Nutzer, wie zum Beispiel Begrüßungssätze, Betriebsinstruktionen, oder Hinweise in der Sprache des Nutzers.

Die gezeigten Ausführungsbeispiele sind rein illustrativ und nicht beschränkend auszulegen. An ihnen können zahlreiche Änderungen vorgenommen werden, ohne den Schutzumfang der Ansprüche zu verlassen. Beispielsweise können die Berechtigungsdaten natürlich unmittelbar auf dem mobilen Datenträger gespeichert werden. Solche und andere Änderungen sind offensichtlich für den Fachmann und sind durch die obigen Ausführungsbeispiele in Kombination mit der Patentspezifikation und den Patentansprüchen für den Fachmann offenbart.

## Patentansprüche

1. System bestehend aus einer Werkzeugmaschine und einer Berechtigungsdatenbereitstellungsvorrichtung (301) mit mehreren mobilen Datenträgern (311) zum Bereitstellen von Berechtigungsdaten zur Ausführung von Betriebsfunktionen der Werkzeugmaschine, wobei die Werkzeugmaschine
- eine Mehrzahl von Betriebsfunktionen,
- eine Auswahleinrichtung (113a - 113d) zur Auswahl einer oder mehrerer Betriebsfunktionen durch einen Nutzer,
- eine Empfangseinrichtung (112) zum Empfangen von Berechtigungsdaten, die angeben, welche Betriebsfunktionen der Nutzer an der Werkzeugmaschine ausführen darf, von dem mobilen Datenträger (311),
- eine Feststelleinrichtung (120) zum Feststellen aufgrund der empfangenen Berechtigungsdaten, welche Betriebsfunktionen vom Nutzer ausgeführt werden dürfen,
- eine Zugriffssteuereinrichtung (130), die dazu eingerichtet ist, den Zugriff auf die Werkzeugmaschine bezüglich der ausgewählten mindestens einen Betriebsfunktion zu steuern und dem Nutzer den Zugriff nur für diejenigen ausgewählten Betriebsfunktionen zu gewähren, zu deren Ausführung der Nutzer gemäß der Berechtigungsdaten berechtigt ist, und
eine Zuordnungseinrichtung (611) zum Zuordnen von einer oder mehrerer Betriebsfunktionen zu einer Mehrzahl von Berechtigungsstufen umfasst, wobei
die auf den mobilen Datenträgern gespeicherten Berechtigungsdaten unveränderliche Daten sind, **dadurch gekennzeichnet, daß** auf einem der mobilen Datenträger Berechtigungsdaten einer Master-Berechtigungsstufe gespeichert sind, die dazu berechtigen, mittels der Zuordnungseinrichtung (611) eine oder mehrere Betriebsfunktionen zu Berechtigungsstufen mit niedrigerem Rang, die auf anderen der mobilen Datenträger gespeichert sind, zuzuordnen, und die Zugriffssteuereinrichtung (130) und die Zuordnungseinrichtung (611) der Werkzeugmaschine dazu eingerichtet sind, eine Änderung der Zuordnung von Betriebsfunktionen zu Berechtigungsstufen nur einem Nutzer mit einem mobilen Datenträger der Master-Berechtigungsstufe zu gewähren, und durch eine Anmeldeeinrichtung (612), die zum Anmelden von Nutzern derart eingerichtet ist, dass ein Nutzer mit einem mobilen Datenträger der Master- Berechtigungsstufe einen Freischaltcode eingibt, der mittels eines Verschlüsselungsalgorithmus, in den eine Unikatnummer eines anzumeldenden mobilen Datenträgers und veränderlichen Daten betreffend die freizuschaltende Betriebsfunktion des anzumeldenden Nutzers eingehen, verschlüsselt ist, und die Feststelleinrichtung (120) dazu eingerichtet ist, die Betriebsfunktionen, für die der anzumeldende Nutzer berechtigt ist, durch Rückrechnung des Verschlüsselungsalgorithmus zu ermitteln.

2. System nach Anspruch 1, **dadurch gekennzeichnet, dass** die Empfangseinrichtung (112) ein Lesegerät umfasst, das dazu eingerichtet ist, mit einem Transponder als mobilen Datenträger (311) zu interagieren.

3. System nach Anspruch 1 oder 2, **dadurch gekennzeichnet, dass** die Daten einen Nutzer identifizierten und dass die Feststelleinrichtung (120) Mittel zur Abfrage von Berechtigungsdaten des identifizierten Nutzers umfasst.

4. System nach Anspruch 1, **dadurch gekennzeichnet, dass** die Anmeldungseinrichtung (612) zum Anmelden von Nutzern die Eingabe von veränderlichen Schulungsdaten ermöglicht, wobei die veränderlichen Schulungsdaten angeben, welche Werkzeug-Schulungen der anzumeldende Nutzer absolviert hat, und der Nutzer aufgrund der Schulungsdaten zur Ausführung einer oder mehrerer Betriebsfunktionen der Werkzeugmaschine berechtigt ist.

5. System nach einem der Ansprüche 4 , **dadurch gekennzeichnet, dass** die Werkzeugmaschine ein Datenspeichermittel (620) umfasst, zum Speichern der Anmeldungsdaten, die angeben, welche Nutzer angemeldet sind.

6. System nach Anspruch 6, **dadurch gekennzeichnet, dass** die Werkzeugmaschine ein Übertragungsmittel (630) zum Übertragen der auf dem Datenspeichermittel (620) gespeicherten Anmeldungsdaten auf ein externes Speichermittel und zum Übertragen der auf einem externen Speichermittel gespeicherten Anmeldungsdaten auf das Datenspeichermittel (620) der Werkzeugmaschine umfasst.

7. System nach Anspruch 5 oder 6, **dadurch gekennzeichnet, dass** das Datenspeichermittel (620) weiterhin Betriebsdaten speichert, die angeben, welche Betriebsfunktionen die Werkzeugmaschine ausführt, von welchem Nutzer die Betriebsfunktionen der Werkzeugmaschine ausgeführt werden, und wann der Nutzer die Betriebsfunktionen ausführt.

8. System nach zumindest einem der vorhergehenden Ansprüche, **gekennzeichnet durch** eine Anzeigevorrichtung (201) zur Anzeige mindestens eines Elements aus der Gruppe von Daten umfassend Betriebsfunktionen, die gemäß der empfangenen Daten ausgeführt werden dürfen, ausgewählte Betriebsfunktionen und aktueller Zustand, in dem sich die Werkzeugmaschine befindet.

## Claims

1. A system consisting of a machine tool and an authorization data providing device (301) having a plurality of mobile data carriers (311) for providing authorization data for executing operating functions of the machine tool, wherein the machine tool comprises
- a plurality of operating functions,
- a selecting device (113a - 113d) for selecting one or more operating functions by a user,
- a receiving device (112) for receiving authorization data specifying, which operating functions the user is allowed to execute on the machine tool, from the mobile data carrier (311),
- a determining device (120) for determining, which operating functions are allowed to be executed by the user, based on the received authorization data,
- an access control device (130), which is arranged to control the access to the machine tool with respect to the selected at least one operating function and to allow access to the user only for those selected operating functions, to the execution of which the user is authorized according to the authorization data, and
- an associating device (611) for associating one or more operating functions with a plurality of authorization stages, wherein
the authorization data stored on the mobile data carriers is invariable data, **characterized in that** authorization data of a master authorization stage is stored on one of the mobile data carriers, which authorizes associating one or more operating functions with authorization stages with lower rank stored on others of the mobile data carriers by means of the associating device (611), and the access control device (130) and the associating device (611) of the machine tool are arranged to allow variation of the association of operating functions with authorization stages only to a user with a mobile data carrier of the master authorization stage, and by a login device (612), which is arranged for logging in users such that a user with a mobile data carrier of the master authorization stage enters an enable code, which is encrypted by means of an encryption algorithm, in which a unique number of a mobile data carrier to be logged in and variable data relating to the operating function to be enabled of the user to be logged in are incorporated, and the determining device (120) is arranged to determine the operating functions, to which the user to be logged in is authorized, by back-calculation of the encryption algorithm.

2. The system according to claim 1, **characterized in that** the receiving device (112) includes a reader, which is arranged to interact with a transponder as the mobile data carrier (311).

3. The system according to claim 1 or 2, **characterized in that** the data identifies a user and that the determining device (120) includes means for polling authorization data of the identified user.

4. The system according to claim 1, **characterized in that** the login device (612) for logging in users allows input of variable training data, wherein the variable training data specifies, which tool trainings the user to be logged in has completed, and the user is authorized to execute one or more operating functions of the machine tool based on the training data.

5. The system according to any one of claims 4, **characterized in that** the machine tool includes a data storage means (620) for storing the login data, which specifies, which users are logged in.

6. The system according to claim 6, **characterized in that** the machine tool includes a transmitting means (630) for transmitting the login data stored on the data storage means (620) to an external storage means and for transmitting the login data stored on an external storage means to the data storage means (620) of the machine tool.

7. The system according to claim 5 or 6, **characterized in that** the data storage means (620) further stores operating data specifying, which operating functions the machine tool executes, by which user the operating functions of the machine tool are executed and when the user executes the operating functions.

8. The system according to at least one of the preceding claims, **characterized by** a display device (201) for displaying at least one element from the group of data including operating functions, which are allowed to be executed according to the received data, selected operating functions and a current state, in which the machine tool is.

## Revendications

1. Système constitué d'une machine-outil et d'un dispositif de mise à disposition de données d'autorisation (301) dotée de plusieurs supports de données (311) mobiles destinés à mettre à disposition des données d'autorisation en vue d'exécuter des fonctions de service de la machine-outil, la machine-outil comprenant
• une pluralité de fonctions de service,
• un moyen de sélection (113a - 113d) pour permettre à un utilisateur de sélectionner une ou plusieurs fonctions de service,
• un moyen de réception (112) pour recevoir du support de données (311) mobile des données d'autorisation qui indiquent quelles sont les fonctions de service que l'utilisateur est autorisé d'exécuter sur la machine-outil,
• un moyen de détermination (120) pour déterminer à partir des données d'autorisation reçues quelles sont les fonctions de service que l'utilisateur est autorisé d'exécuter,
• un moyen de commande d'accès (130) qui est conçu pour commander l'accès à la machine-outil par rapport à ladite au moins une fonction de service sélectionnée et pour accorder à l'utilisateur l'accès uniquement à celles des fonctions de service sélectionnées que l'utilisateur est autorisé d'exécuter selon les données d'autorisation, et
• un moyen d'attribution (611) pour attribuer une ou plusieurs fonctions de service à une pluralité de niveaux d'autorisation,
dans lequel
les données d'autorisation mémorisées sur les supports de données mobiles sont des données invariables,
**caractérisé en ce que**
des données d'autorisation d'un niveau d'autorisation maître sont mémorisées sur l'un des supports de données mobiles, qui autorisent à attribuer à des niveaux d'autorisation de rang inférieur, mémorisés sur d'autres supports de données mobiles, une ou plusieurs fonctions de service à l'aide du moyen d'attribution (611), et
**en ce que** le moyen de commande d'accès (130) et le moyen d'attribution (611) de la machine-outil sont conçus pour accorder uniquement à un utilisateur disposant d'un support de données mobile du niveau d'autorisation maître une modification de l'attribution des fonctions de service à des niveaux d'autorisation,
et il est prévu un moyen d'inscription (612) qui, en vue d'inscrire des utilisateurs, est conçu de telle sorte qu'un utilisateur muni d'un support de données mobile du niveau d'autorisation maître intègre un code d'activation qui est crypté au moyen d'un algorithme de cryptage qui englobe un numéro unique d'un support de données mobile à inscrire et des données variables concernant la fonction de service à activer de l'utilisateur à inscrire, et
le moyen de détermination (120) est conçu pour déterminer par calcul rétroactif de l'algorithme de cryptage les fonctions de service auxquelles l'utilisateur à inscrire est autorisé.

2. Système selon la revendication 1, **caractérisé en ce que** le moyen de réception (112) comprend un appareil de lecture qui est conçu pour interagir avec un transpondeur à titre de support de données (311) mobile.

3. Système selon la revendication 1 ou 2, **caractérisé en ce que** les données identifient un utilisateur et **en ce que** le moyen de détermination (120) comprend des moyens pour interroger les données d'autorisation de l'utilisateur identifié.

4. Système selon la revendication 1, **caractérisé en ce que** le moyen d'inscription (612) pour inscrire des utilisateurs permet d'entrer des données de cours de formation variables, les données de cours de formation variables indiquant quels sont les cours de formation relatifs aux outils que l'utilisateur à inscrire a suivis, et en se basant sur les données de cours de formation l'utilisateur est autorisé à exécuter une ou plusieurs fonctions de service de la machine-outil.

5. Système selon l'une des revendications 4, **caractérisé en ce que** la machine-outil comprend un moyen de mémorisation de données (620) pour mémoriser les données d'inscription qui indiquent quels sont les utilisateurs qui sont inscrits.

6. Système selon la revendication 6, **caractérisé en ce que** la machine-outil comprend un moyen de transfert (630) pour transférer les données d'inscription mémorisées sur le moyen de mémorisation de données (620) vers un moyen de mémorisation externe et pour transférer les données d'inscription mémorisées sur un moyen de mémorisation externe vers le moyen de mémorisation de données (620) de la machine-outil.

7. Système selon la revendication 5 ou 6, **caractérisé en ce que** le moyen de mémorisation de données (620) mémorise en outre des données de service qui indiquent quelles sont les fonctions de service que la machine-outil exécute, quel est l'utilisateur qui exécute les fonctions de service de la machine-outil et quand c'est que l'utilisateur exécute les fonctions de service.

8. Système selon l'une au moins des revendications précédentes, **caractérisé par** un dispositif d'affichage (201) pour afficher au moins un élément parmi le groupe de données comprenant des fonctions de service qui sont autorisées d'être exécutées selon les données reçues, des fonctions de service sélectionnées et l'état actuel dans lequel se trouve la machine-outil.
